# FASCICULE DE BREVET EUROPEEN

(11) **EP 2 943 915 B1**
(45) Date de publication et mention de la délivrance du brevet: **30.03.2022**
(21) Numéro de dépôt: 14707317.5
(22) Date de dépôt: 07.01.2014
(51) Int. Cl.: G06N 7/00

(54) **PROCEDE DE PRISE DE DECISION POUR DES ELEMENTS EN RESEAU DISTRIBUE**
ENTSCHEIDUNGSPROZESS FÜR ELEMENTE IN EINEM VERTEILTEN NETZWERK
DECISION MAKING METHOD FOR DISTRIBUTED NETWORK ELEMENTS

(30) Priorité: 10.01.2013 FR 1350212
(43) Date de publication de la demande: 18.11.2015
(73) Titulaire: Airbus DS SAS, 78990 Elancourt (FR)
(72) Inventeur: RABOTIN, Christopher, F-95210 Saint Gratien (FR); VALVERDE, Fabien, F-78340 Les Clayes sous Bois (FR)
(74) Mandataire: Cabinet Camus Lebkiri
(86) Numéro de dépôt international: PCT/EP2014/000014
(87) Numéro de publication internationale: WO 2014/108325

(56) Documents cités:
- US-A1- 2006 021 023
- David K. Gifford: "Weighted Voting for Replicated Data", Proceeding SOSP '79 Proceedings of the seventh ACM symposium on Operating systems principles, 31 décembre 1979 (1979-12-31), pages 150-162, XP055077209, Extrait de l'Internet: URL:http://www.cs.cmu.edu/~15-610/READINGS /required/availability/gifford79.pdf [extrait le 2013-08-30]
- YAO WEI ET AL: "Automatic Distributing Schemes of Physical Cell Identity for Self-Organizing Networks", INTERNATIONAL JOURNAL OF DISTRIBUTED SENSOR NETWORKS, vol. 2012, 31 décembre 2012 (2012-12-31), pages 1-10, XP055077225, ISSN: 1550-1329, DOI: 10.1109/TCOMM.2009.09.080067

## Description

La présente invention se rapporte à un procédé de prise de décision par une unité de traitement dite décideur, par propagation d'une proposition dans un réseau distribué d'unités de traitement, chaque unité de traitement étant dotée d'une intelligence décisionnelle. Par intelligence décisionnelle, on entend une capacité matérielle et logicielle pour mettre en œuvre un processus décisionnel.

L'invention peut s'appliquer à tout système non autonome, complètement ou semi autonome.

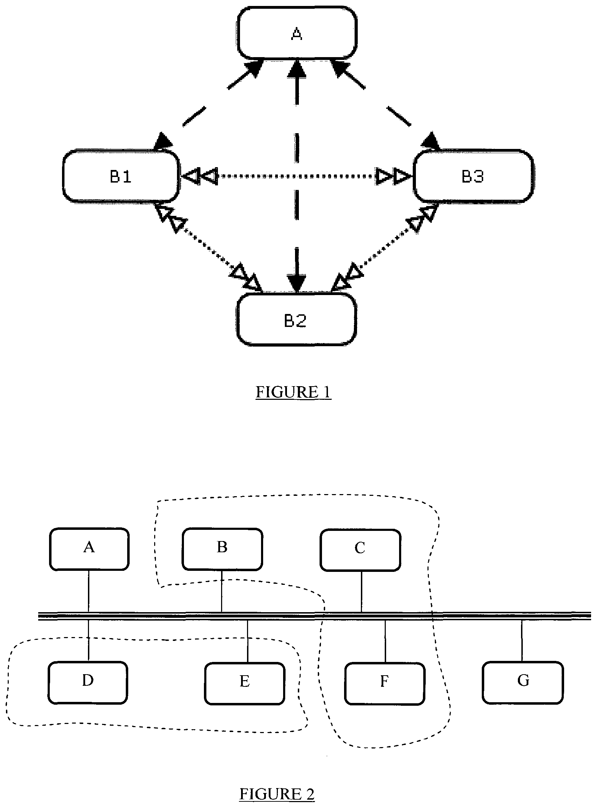

Dans un réseau autonome, il y a trois façons possibles d'organiser la prise de décision. Sur la figure 1 selon l'art antérieur, le nœud A est considéré comme un superviseur et communique avec chaque nœud B sur le réseau transport (TN1) (lignes tirets). Les nœuds B1 à B3 sont sur le même niveau hiérarchique et peuvent communiquer entre eux sur un réseau de transport indépendant: le réseau de transport 2 (TN2) (lignes pointillées).

On distingue généralement trois types d'algorithmes de prise de décision.

### Algorithme centralisé

Dans ce cas, le superviseur A prend les décisions pour toute requête de B1, B2 ou B3. Pour une décision optimale, A doit être conscient de toutes les informations relatives à l'environnement des nœuds B. Un algorithme centralisé fonctionne de la manière suivante:
1) Périodiquement, B envoie toutes les informations disponibles sur TN1 à A ;
2) Si B a besoin qu'une décision soit prise, B met en œuvre les étapes suivantes :
   a) demander qu'une décision soit prise par A,
   b) attendre que A calcule une solution,
   c) recevoir et appliquer la solution de A.

La mise en œuvre d'un algorithme centralisé présente les avantages suivants:
- Le superviseur A est pleinement conscient de l'environnement réseau de tous ses nœuds fils B.
- Les noeuds B peuvent être des machines très simples car ils nécessitent qu'une puissance de calcul très faible.

De même la mise en œuvre d'un algorithme centralisé présente les inconvénients suivants:
- La décision dépend de la stabilité du réseau TN1: si le réseau de transport TN1 est défectueux, tout nœud B ayant besoin d'une décision doit attendre jusqu'à ce que TN1 soit opérationnel et que la réponse de A puisse être reçue. Si cette décision est critique, le réseau, dans son entier, peut tomber en panne.
- En fonction de la période d'envoi par B des informations nécessaires à la prise de décision ainsi que du temps de propagation de la réponse : la décision prise par A peut être obsolète.
- Si plusieurs nœuds B demandent une décision en même temps, il peut y avoir une surcharge ou un engorgement du nœud A du fait de la réception et/ou du calcul des paramètres environnementaux pour plusieurs nœuds B.
- Comme la mise à jour de tous les paramètres environnementaux de chaque nœud B est périodique au niveau du superviseur A, il existe un grand nombre de signalisations, donc une charge importante, sur le réseau directement liées à la supervision de A.

### Algorithme distribué

Dans un algorithme distribué, la notion de superviseur A n'existe pas. Toute information de prise de décision transite par le réseau de transport TN2.

Un exemple de réalisation peut être:
Si B1 doit prendre une décision :
1) B1 calcule une solution possible
2) B1 consulte B2 et B3 pour savoir si la solution proposée est viable vis-à-vis de l'environnement de B2 et de B3:
   a) si B2 et B3 sont d'accords, B1 applique la solution proposée
   b) si l'un ou les deux ne sont pas d'accords, aller à l'étape 1) ou fin du processus .

### « Fin de processus » signifie que l'on retient la solution proposée par B1.

La mise en œuvre d'un algorithme distribué présente les avantages suivants:
- peu de signalisations, donc une faible charge pour tout processus de prise de décision.
- Les décisions ne sont pas obsolètes lorsqu'elles sont prises.

La « faible charge » due une signalisation limitée signifie qu'il y a peu de messages échangés comparativement à l'algorithme Centralisé où A reçoit périodiquement les paramètres d'environnement de tous les Nœuds B.

La mise en œuvre d'un algorithme distribué présente les inconvénients suivants:
- La décision dépend de la stabilité du réseau TN2: si ce réseau de transport ne fonctionne pas correctement, une mauvaise décision peut être prise.
- Les nœuds B1 à B3 doivent être capables de calculer des décisions et de mettre en œuvre des algorithmes.

### Algorithme hybride

Un algorithme hybride permet de combiner les avantages des deux méthodes précédentes. Dans le cas d'un algorithme hybride, certaines décisions peuvent être prises par le nœud A superviseur, tandis que d'autres décisions peuvent être prises exclusivement par les nœuds B. Un exemple de réalisation d'un algorithme hybride peut être le suivant:
Si B1 doit prendre une décision :
1) Si la décision doit être calculée de manière centralisée:
   a) Voir l'algorithme centralisé ci-dessus.
2) Dans le cas contraire, si la décision doit suivre un algorithme de calcul distribué:
   a) Voir l'algorithme distribué ci-dessus.

La mise en œuvre d'un algorithme hybride présente les avantages suivants:
- peu de signalisations si un nombre limité de décisions sont centralisées ou si la décision centralisée ne nécessite que peu de paramètres environnementaux.
- Les décisions fondées sur des algorithmes distribués ne sont pas obsolètes.
- Le superviseur A est partiellement conscient de l'environnement réseau de ses noeuds fils B.
- Selon le cas, la décision à prendre peut être indépendante de l'un ou l'autre réseau de transport.

La mise en oeuvre d'un algorithme hybride présente les inconvénients suivants:
- Les nœuds A et B doivent être capables de calculer des décisions et de mettre en œuvre des algorithmes.
- En fonction de la période d'envoi par B des informations nécessaires à la prise de décision ainsi que du temps de propagation de la réponse : la décision prise par A peut être obsolète.
- Selon le cas, la décision à prendre peut être dépendante de l'un ou l'autre réseau de transport TN1 ou TN2.

On connaît le document US2006/021023A1 (STEWART EBEN P [US] ET AL) 26-01-2006 qui décrit un procédé de prise de décision par pondération. On connaît également le document «Weighted Voting for Replicated Data », 1979, de David K. Gifford, qui propose l'utilisation d'un processus de vote influencé par un quorum afin de déterminer comment les données doivent être répliquées dans les systèmes distribués. Cependant, l'algorithme proposé par Gifford n'est pas polyvalent, ni modulaire, ni hybride. En fait, Gifford a proposé un algorithme pour l'entretien de fichiers répliqués à utiliser dans des réseaux informatiques distribués.

La présente invention a pour but un nouveau procédé de prise de décision utilisant le principe de quorum.

Un autre but de l'invention est la mise en œuvre d'un nouveau procédé de prise de décision sur la base d'un algorithme hybride amélioré, polyvalent et modulaire.

On atteint au moins l'un des objectifs précités avec un procédé de prise de décision par une unité de traitement dite décideur, par propagation d'une proposition dans un réseau distribué d'unités de traitement, chaque unité de traitement étant dotée d'une intelligence décisionnelle.

Avec le procédé selon l'invention, la décision peut être centralisée, distribuée ou hybride en fonction de la pondération affectée à chaque votant.

Le procédé selon l'invention est plus performant qu'un algorithme de prise de décision en mode hybride car on accorde de l'influence à chaque votant. En d'autres termes, pour chaque décision devant être prise par un décideur, on détermine une liste de votants. De cette liste, le décideur définit une pondération, soit une influence de chaque votant sur la décision finale. Chaque votant interrogé doit fournir une réponse qui peut être un soutien, c'est-à-dire une confirmation de la proposition émise par le décideur, ou une opposition à cette proposition. Selon un mode de réalisation préférée de l'invention, cette réponse peut également être « sans opinion », c'est-à-dire une réponse neutre. La réponse n'est donc pas booléenne, on a trois possibilités. La réponse neutre permet notamment de ne pas considérer dans la décision finale le votant ayant fourni une réponse neutre. L'influence attribuée par le décideur à ce votant peut alors être distribuée à tous les autres votants en fonction de leur influence respective. Enfin, si un nombre suffisant de votants ont répondu, le décideur prend sa décision finale. Pour éviter qu'un votant trop lent ne retarde la prise de décision finale, on prévoit une durée maximale au-delà de laquelle l'avis des votants ne sera pas pris en compte. Cette durée de traitement est définie par le décideur puis communiquée à tous les votants. Cela permet aux procédés de prise de décision mis en oeuvre au sein des votants de calibrer la précision de leur décision respective en fonction du temps à leur disposition. De préférence, si un votant répond trop tard, sa réponse n'est pas prise en considération, sa réponse est considérée comme sans opinion. Toutes les décisions sont mises à jour lorsqu'elles sont reçues par le décideur. On peut aussi prévoir que si un votant met en oeuvre un algorithme convergent pour déterminer une réponse, à l'issue de la durée de traitement qui lui est impartie, il doit décider même si son algorithme n'a pas convergé ou transmettre une décision en cours. Par décision en cours, on entend une décision intermédiaire qui sera transformée en une décision finale à l'issue d'un algorithme convergent.

Par ailleurs, si un votant estime que son traitement ne lui permettra pas de répondre dans le délai imparti par la durée de traitement, le votant peut décider de ne pas répondre pour libérer de la bande passante.

Afin de privilégier la rapidité du traitement, le calcul du résultat peut se faire au fur et à mesure que les réponses arrivent. Quand l'un des seuils est atteint, on estime qu'on a un résultat.

Afin d'éviter qu'une décision ne soit prise lorsque le nombre de réponses est insuffisant, on définit un quorum en fonction de la nature des décisions des votants. En particulier, on définit un seuil pour les réponses de confirmation et un autre seuil pour les réponses d'infirmation.

Le procédé selon la présente invention est à la fois de type hybride et pondéré, intègre un temporisateur et ne dépend pas de la différenciation entre plusieurs réseaux de transport.

On peut par exemple définir un superviseur qui pourrait avoir une connaissance complète ou partielle du réseau distribué.

La sélection d'un ensemble de votants est réalisée selon des critères relatifs à la proximité, la nature (caractéristiques techniques ou capacité fonctionnelle notamment) de chaque votant et/ou le contenu de la requête.

De par cette sélection, le procédé selon l'invention est un procédé non seulement hybride mais dynamique. Les votants ne sont pas uniquement distingués par leur niveau hiérarchique, mais également par leur influence.

On associe un niveau de priorité à la proposition, et la durée de traitement est spécifique à ce niveau de priorité. Ce niveau de priorité peut être un identifiant unique. A titre d'exemple, on peut définir les quatre priorités suivantes:
1) Critique
2) Haute
3) Normal
4) Faible

Cela permet de hiérarchiser et dater les propositions pour que les propositions les plus importantes soient prises en compte rapidement.

Au moins un votant, qui est une unité de traitement sélectionnée individuellement ou au sein d'un groupe de votants, peut être configuré pour appliquer les étapes a) à h) ci-dessus à d'autres unités de traitement dites secondaires en considérant la même proposition.

En d'autres termes, un votant peut considérer de façon autonome qu'il doit à son tour avoir l'avis d'autres unités de traitement pour la même proposition. C'est ce qu'on appelle la propagation de la décision du quorum. La proposition propagée doit avoir une priorité si possible plus élevée que la proposition originale ou bien être affectée d'une durée de traitement plus courte de façon à ce que ce votant puisse répondre dans le temps qui lui est imparti. Par conséquent, on affecte à la proposition soumise aux dites unités de traitement secondaires un niveau de priorité supérieur ou égal au niveau de priorité affecté à la proposition et déterminé par le décideur.

Le réseau distribué peut être un réseau homogène ou un réseau hétérogène.

Avantageusement, toutes les unités de traitement du réseau distribué peuvent être de niveaux hiérarchiques identiques ou de niveaux hiérarchiques différents.

Il est proposé un système comprenant une pluralité d'unités de traitement dotées d'une intelligence décisionnelle, ces unités de traitement étant connectées entre elles en réseau, chaque unité de traitement étant configurée en tant que décideur pour mettre en oeuvre un procédé de prise de décision par propagation d'une proposition dans le réseau tel que défini ci-dessus.

L'invention concerne un équipement de télécommunication doté d'une intelligence décisionnelle et connecté en réseau à une pluralité d'unités de traitement, cet équipement étant configuré en tant que décideur pour mettre en œuvre un procédé de prise de décision par propagation d'une proposition dans le réseau. Le décideur est configuré pour mettre en œuvre un procédé de prise de décision par propagation d'une proposition dans le réseau tel que défini ci-dessus. Cet équipement peut être un MME (pour « Mobility Management Entity »), un eNode ou un UE (pour « User Equipment »).

D'autres avantages et caractéristiques de l'invention apparaîtront à l'examen de la description détaillée d'un mode de mise en oeuvre nullement limitatif, et des dessins annexés, sur lesquels :
La figure 1 est une vue schématique de plusieurs éléments constitués en réseau selon l'art antérieur,
La figure 2 est une vue schématique d'un réseau d'unités de traitement A à G sans distinction du type de lien entre les unités de traitement.
La figure 3 est un organigramme illustrant différentes étapes du procédé selon l'invention.
La figure 4 est un graphique comparatif qui illustre la qualité de la décision prise en fonction du procédé et de la qualité du réseau.
La figure 5 est une vue schématique illustrant un réseau d'équipements dans lequel on met en oeuvre le procédé selon l'invention pour l'attribution d'un identifiant PCI ("Physical Cell Identity" en anglais).
La figure 6 est une vue schématique illustrant la propagation d'une proposition dans le réseau de la figure 5.
La figure 7 est une représentation chronologique de la propagation de la proposition telle qu'illustrée sur la figure 6.

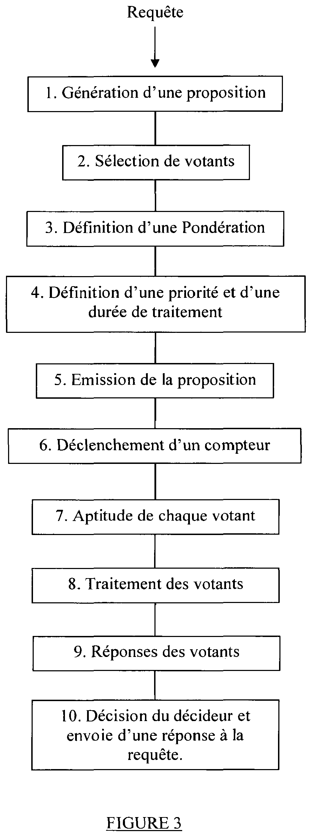

On va maintenant décrire, conformément aux figures 2 et 3, le mode de réalisation de la présente invention appliquée à la problématique d'allocation d'identifiants de cellules dans un réseau de téléphonie mobile notamment. En particulier, il s'agit d'allouer un identifiant PCI ("Physical Cell Identity" en anglais) à un eNodeB de façon à éviter tout problème de confusion et de collision. Un eNodeB est un relais dans un réseau LTE. Le PCI est un paramètre nécessaire pour former une cellule radio. Un identifiant PCI est utilisé par un équipement utilisateur (UE) afin d'identifier une cellule. Un eNodeB est relié à la fois au cœur de réseau ainsi qu'à d'autres relais.

Sur la figure 2, on voit un ensemble d'équipements A, B, C, D, E, F, G, intégrés au sein d'un réseau sans distinction particulière des liens entre ces différents équipements. Il peut s'agir de liens physiques filaires ou sans fils. Avec le procédé selon l'invention, il n'est pas nécessaire de désigner un superviseur.

Lorsque l'équipement A doit prendre une décision à la suite d'une requête, il met en œuvre un procédé décisionnel selon l'invention. La première étape comme représentée sur la figure 3, consiste à générer une proposition. Cette proposition est par exemple un numéro PCI que l'équipement A, le décideur, souhaite présenter en réponse à ladite requête. Avant de répondre cela, l'équipement A consulte les autres équipements de la manière suivante :
A l'étape 2, le décideur sélectionne plusieurs équipements qui seront considérés comme des votants. Cette sélection est réalisée en fonction de la nature de la requête ou en fonction de la proximité notamment des équipements. La sélection peut également être aléatoire ou selon un principe tournant. La sélection peut être préconfigurée, déterminée à partir d'une table statique ou d'une table dynamique au sein du décideur ou dans une unité de traitement indépendante ou dans un superviseur du réseau. Dans le cas de la figure 2, on sélectionne deux groupes de votants : un premier groupe formé des votants B, C et F, un second groupe formé de votants E et D. G est un équipement non sélectionné.

A l'étape 3, le décideur ou un superviseur définit une pondération que l'on affecte à chaque groupe de façon prédéterminée ou en fonction des caractéristiques de chaque groupe de votants : par exemple 60% pour le premier groupe, et 40% pour le second groupe. C'est-à-dire qu'on accordera plus d'influence au premier groupe qu'au second ; l'influence étant une notion qui est concrétisée ici par une pondération en pourcentage. La pondération pour chaque votant ou groupe de votants peut être statique (prédéterminée) ou dynamique (variant en fonction de la proposition, des caractéristiques des votants, de la fiabilité des votants, d'une règle prédéfinie,...).

On peut également définir un seuil de façon prédéterminée, en fonction de la proposition et/ou en fonction des votants. Ce seuil est de 45% par exemple, pour les réponses de confirmation. C'est-à-dire si au moins 45% des réponses, en tenant compte des pondérations, sont des confirmations alors on considère que la proposition est confirmée. De la même manière on peut définir un seuil de 40% par exemple pour les réponses d'infirmation. Il est intéressant de définir des seuils notamment du fait que certains équipements peuvent avoir une réponse « sans opinion », c'est-à-dire ne pas confirmer ou infirmer la proposition, ce qui conduirait à un total de pourcentage de réponses de confirmation et d'infirmation inférieur à 100%. On prévoit tout de même dans le cas où les deux seuils seraient atteints, de donner a priori la priorité à la réponse de confirmation ou à la réponse d'infirmation, ou bien de demande un renouvellement du processus décisionnel à partir de l'étape 2 par exemple.

A l'étape 4, le décideur détermine un niveau de priorité pour la proposition générée à l'étape 1. Ce niveau de priorité est notamment fonction du type de la requête. En même temps, on définit une durée de traitement, un « timeout » correspondant au temps maximum imparti pour cette proposition. On considère un tableau dynamique, mis à jour de façon continue, dans lequel on répertorie toutes les propositions en cours avec leur niveau de priorité. Ce tableau permet de gérer les priorités et de suivre la bonne adéquation entre la capacité (en bande passante) du réseau et la quantité de propositions en cours. Ce tableau peut être géré par un superviseur ou bien au sein du décideur.

A l'étape 5, le décideur contacte les votants et génère la proposition à leur attention.

A l'étape 6, le décideur déclenche un temporisateur en même temps que l'envoi de la proposition. Il envoie également la durée de traitement avec la proposition.

A l'étape 7, chaque votant détermine son aptitude à répondre à la proposition.
- S'il considère qu'il peut répondre dans le temps imparti, il met en œuvre son procédé décisionnel.
- S'il considère qu'il n'est pas apte à répondre, qu'il a déjà répondu à cette proposition ou qu'il ne peut pas répondre dans le temps imparti, il peut rester muet pour ne pas encombrer le réseau, réémettre une réponse précédente ou bien émettre une réponse « sans opinion », cela en fonction du type de proposition ou de façon configurée.
- S'il estime qu'il a besoin à son tour d'un avis d'autres unités de traitements, il peut consulter à son tour ces autres unités, dits secondaires, de façon à avoir un avis sur la même proposition mais avec un niveau de priorité, si possible supérieur, ou égal au niveau de priorité de la proposition émise par le décideur ; la consultation consistant à appliquer les étapes 2 à 7 ci-dessus à ces autres unités de traitement.

A l'étape 8, chaque votant met en œuvre son procédé décisionnel et génère une réponse qui peut être : « confirmation », « infirmation » ou « sans opinion ».

A l'étape 9, lorsque le temporisateur a expiré, le décideur considère les réponses en cours lorsqu'il y en a. Les réponses sont transmises en temps réel par chaque votant vers le décideur, ou bien le décideur récupère ces réponses de façon régulière ou à l'expiration de la durée de traitement impartie. La décision d'un groupe peut être unique et/ou bien un groupe de décisions de chaque votant.

A l'étape 10, le décideur vérifie si au total, l'ensemble des réponses obtenues permet de dépasser le seuil de confirmation ou d'infirmation, puis confirme ou non sa proposition en fonction du résultat obtenu.

Le procédé selon l'invention permet d'obtenir une décision par quorum. Il permet par exemple une détermination autonome de numéros PCI et une méthode correction des conflits.

Les applications d'un tel procédé de décision par quorum comprennent notamment :
- la détermination de numéros PCI pour une nouvelle mise en place d'un eNodeB avec et sans connectivité OAM (« Opération, Administration, Maintenance »),
- la détermination de numéros PCI avec ou sans connexion aux eNodeB voisins,
- la détection des conflits PCI dans le voisinage sans fil immédiat, et
- la correction des conflits PCI avec temps d'arrêt minimum par une OAM ou par une autre eNodeB,
- La détermination automatique du PCI valable sans la nécessité d'une table de terminal sans fil basée sur les relations inter-voisins,
- Les tentatives pour sauver des appels et le contexte de chaque terminal en ligne afin de limiter les problématiques pour les terminaux.

Le procédé selon l'invention est extrêmement fiable, polyvalent, modulable et ne dépend pas de la qualité du transport du réseau ni de la charge (ni de la capacité des votants à répondre). Le procédé est fiable car on exploite des unités de traitement fiables du fait de la pondération. Chaque décision est prise directement ou indirectement par des nœuds du réseau qui ont la connaissance.

Dans des systèmes distribués complexes, la mise en œuvre d'un tel procédé permet une prise de décision globalement correcte dans le temps de traitement contrôlé. On peut également créer un réseau hiérarchique distribué avec des pondérations statiques ou dynamiques de chaque élément du réseau.

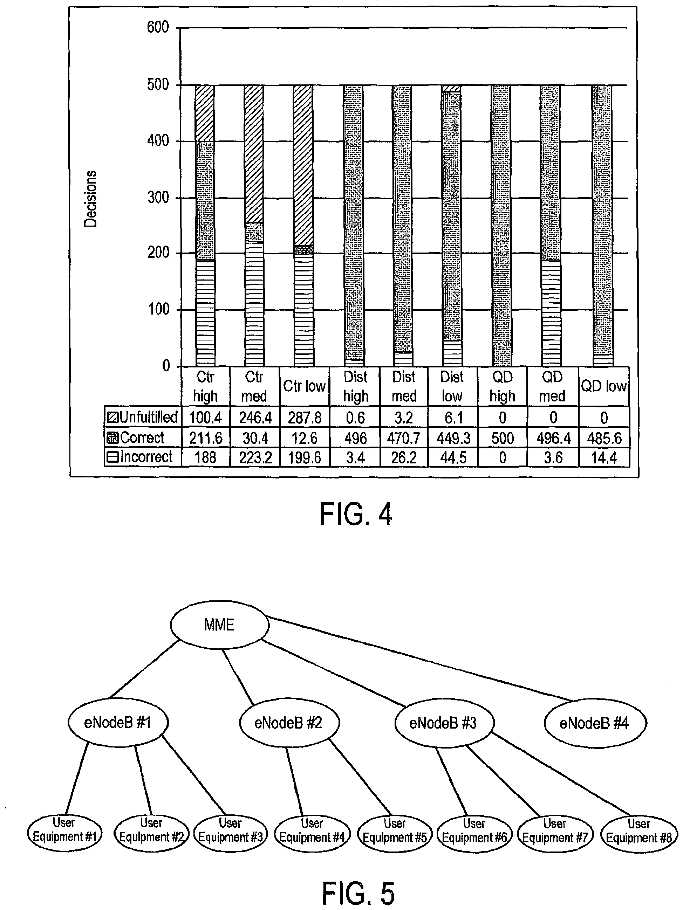

La figure 4 est un tableau comparatif entre le procédé selon l'invention et des procédés selon l'art antérieur en ce qui concerne :
- la précision de la décision : les décisions approuvées par les votants sont elles correctes selon le contrôleur de simulation?
- la rapidité de la décision : quelle est la rapidité de détermination des décisions?
- la latence de la décision déterminée : est-ce que la valeur-réseau moyenne déterminée est proche de la réelle valeur-réseau moyenne ? Ceci détermine la validité de la décision.

A partir de simulations, on peut tirer les conclusions suivantes sur le procédé selon l'invention :
- les décisions sont toujours obtenues ;
- les décisions sont pour la plupart correctes, même avec une qualité de réseau faible;
- les décisions sont calculées dans le temps imparti, quelle que soit la qualité du réseau;
- le temps de latence entre la valeur-réseau calculée et la valeur-réseau réelle est meilleur par rapport à tout autre procédé testé (sauf dans le cas d'un algorithme distribué avec une haute qualité du réseau de transport) et est constant quelle que soit qualité du réseau de transport.

Même dans des conditions de réseau de basse qualité avec les procédés distribués ou procédé de décision par quorum selon l'invention, les décisions prises sont quasiment toujours "bonnes". Ce qui différencie notamment le procédé de décision par quorum par rapport à un procédé distribué est que la décision est prise en un temps fini dans le procédé de décision par quorum.

On va maintenant décrire sur les figures 5 à 7, la propagation d'une proposition d'attribution d'un identifiant PCI. On distingue un réseau constitué d'une entité MME (« Mobility Management Entity » en anglais) ayant en charge une zone comprenant trois noeuds eNodeB 1, eNodeB 2 et eNodeB 3. L'entité MME est un superviseur de cette zone. Chaque eNodeB est apte à échanger des flux de signalisation et des flux de média avec plusieurs équipements utilisateurs, tels que des appareils mobiles. L'eNodeB 1 communique avec équipement1, équipement2 et équipements. L'eNodeB 2 communique avec équipement4 et équipements. L'eNodeB 3 communique avec équipement6, équipement7 et équipements.

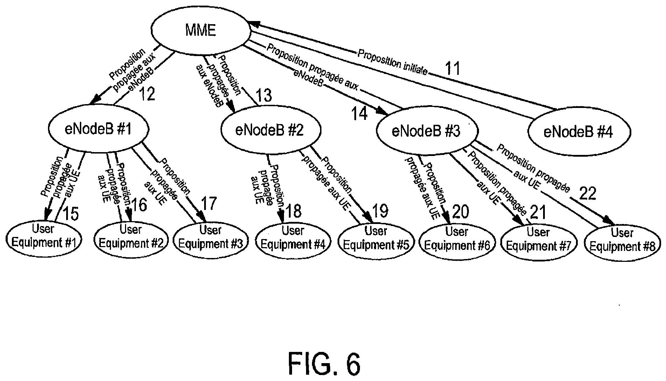

Sur la figure 5, on voit une nouvelle eNodeB 4 que l'on place dans la zone gérée par le MME. Cette eNodeB 4 n'est attaché à aucun équipement utilisateur et ne dispose d'aucune interface avec aucun des eNodeB déjà présentes dans la zone. Selon l'invention, l'eNodeB 4 est le décideur et génère une proposition à l'étape 11, voir figures 5 et 6. Cette proposition comprend un identifiant PCI que le décideur eNodeB 4 propose d'acquérir. A cet identifiant PCI, le décideur associe une priorité et une temporisation « timeout ». L'ensemble identifiant PCI, priorité et temporisation, est transmis vers l'entité MME. Cette dernière propage, aux étapes 12, 13 et 14, la proposition vers des unités de traitements secondaires que sont les eNodeB 1 à 3. Une pondération peut être appliquée à ces différentes unités de traitement. On propage bien la même proposition, il s'agit du même identifiant PCI que lors de l'étape 11. A l'étape 12, l'entité MME associe à l'identifiant PCI une nouvelle priorité dite priorité+1 ainsi qu'une temporisation « timeout1 », le tout étant envoyé vers l'eNodeB 1. Il en est de même à l'étape 13 au cours de laquelle l'entité MME associe à l'identifiant PCI la priorité+1 et une temporisation « timeout2 », et transmet l'ensemble vers l'eNodeB 2. L'eNodeB 3 reçoit également l'identifiant PCI, la priorité+1 et une temporisation « timeout3 » de la part de l'entité MME à l'étape 14.

De la même manière, durant les étapes 15 à 22, chaque eNodeB 1 à 3 propage la proposition avec l'identifiant PCI, une nouvelle priorité dite priorité+2 et des temporisations « timeout4 » à « timeout11 » vers respectivement plusieurs équipements utilisateurs 1 à 3, 4 à 5, et 6 à 8.

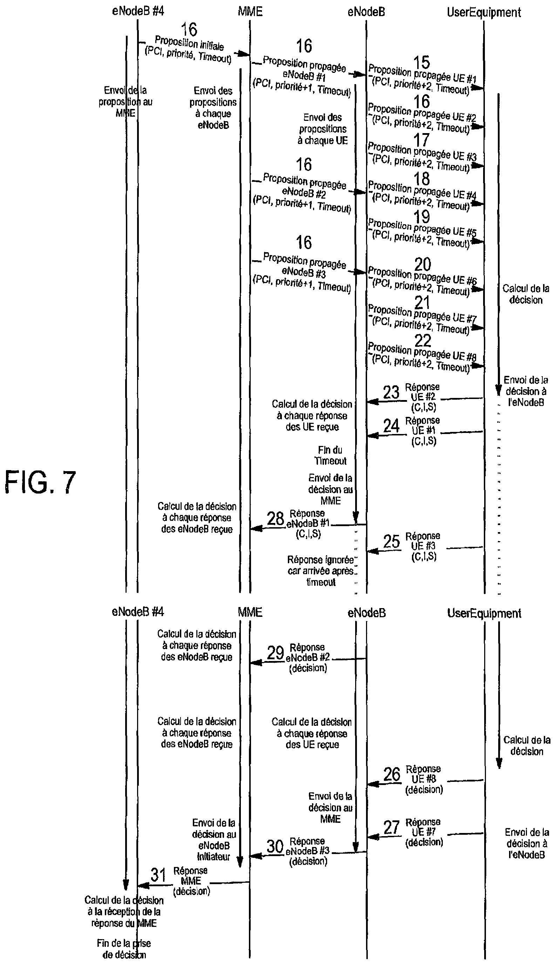

Ensuite, chaque équipement utilisateur calcule une décision, puis envoie une réponse contenant cette décision dès qu'elle est calculée, vers l'eNodeB à laquelle cet équipement utilisateur est attaché. Sur la figure 7, les décisions aux étapes 23 et 24 parviennent à l'eNodeB 1 avant l'expiration du « timeout1 ». Par contre, la réponse à l'étape 25 envoyée par l'équipement utilisateur 3 parvient hors délai, après l'expiration du « timeout1 » de l'eNodeB 1 : cette réponse contenant la décision de l'équipement utilisateur 3 ne sera donc pas considérée. Les décisions peuvent être une confirmation « C », une infirmation « I » ou un sans opinion « S ». L'eNodeB 3 reçoit également des réponses durant les étapes 26 et 27.

Les eNodeB 1 à 3 calculent ensuite leur décision qu'elles transmettent aux étapes 28 à 30 vers l'entité MME. Cette dernière calcule sa décision à chaque réception d'une décision de la part d'un eNodeB.

A l'étape 31, la décision finale de la part de l'entité MME est envoyée vers l'eNodeB4.

Le procédé selon l'invention permet aux nœuds d'un réseau de travailler en accord avec les systèmes de maintenance et d'administration (OAM, pour « opération, administration and maintenance » en anglais) tout en préservant une autonomie partielle. Utiliser le procédé selon l'invention en fils peut réduire considérablement la charge du réseau de manière à ce que les serveurs de décision centralisée ne nécessitent plus une connaissance complète de tout le réseau pour chaque décision à prendre. En outre, le procédé selon l'invention, procédé de décision par quorum (« quorum decision » en anglais), permet également aux nœuds fils de réagir très rapidement aux décideurs, dans la mesure où on peut limiter le temps imparti à la réponse et définir un faible nombre de votants (i.e. faible quorum).

## Revendications

1. Procédé de prise de décision par une unité de traitement dite décideur, par propagation d'une proposition dans un réseau de téléphonie mobile comprenant des unités de traitement, chaque unité de traitement étant dotée d'une intelligence décisionnelle, **caractérisé en ce que** :
a) le décideur détermine une proposition sur réception d'une requête d'allouer un numéro PCI à un eNodeB du réseau de téléphonie mobile, la proposition étant un numéro PCI, Physical Cell Identity, que le décideur souhaite présenter en réponse à ladite requête, la décision à prendre étant la confirmation ou l'infirmation du numéro PCI à présenter en réponse à la requête reçue,
b) le décideur sélectionne un ensemble d'unités de traitement dites votants, pour analyser la proposition et pour présenter une réponse, cette réponse comprenant une confirmation de la proposition, une infirmation de la proposition ou une réponse « sans opinion »,
c) le décideur définit une pondération en pourcentage pour chaque votant ou groupe de votants ainsi sélectionnés,
d) le décideur définit un seuil de confirmation en pourcentage à partir duquel la proposition est considérée comme confirmée,
e) le décideur définit un seuil d'infirmation en pourcentage à partir duquel la proposition est considérée comme infirmée,
f) le décideur déclenche un temporisateur et définit au moins une durée de traitement,
g) le décideur transmet ladite proposition avec la durée de traitement via le réseau distribué vers l'ensemble de votants,
h) pendant la durée de traitement, en fonction des réponses qu'il reçoit, le décideur détermine le pourcentage de réponse de confirmation et le pourcentage de réponse d'infirmation, puis confirme ou infirme la proposition en comparant les pourcentages ainsi déterminés aux seuils de confirmation et d'infirmation ; à l'issue de la durée de traitement, si aucune décision n'a été prise, le décideur récupère l'ensemble de réponses disponibles et détermine le pourcentage de réponse de confirmation et le pourcentage de réponse d'infirmation, puis confirme ou infirme la proposition en comparant les pourcentages ainsi déterminés aux seuils de confirmation et d'infirmation ;
le procédé étant en outre **caractérisé en ce que** le décideur associe un niveau de priorité à la proposition, et **en ce que** la durée de traitement est spécifique à ce niveau de priorité, **en ce qu'**au moins un votant est configuré pour appliquer les étapes a) à h) ci-dessus à d'autres unités de traitement dites secondaires en considérant la même proposition, et **en ce que** le décideur affecte à la proposition soumise aux dites unités de traitement secondaires un niveau de priorité supérieur ou égal au niveau de priorité affecté à la proposition et propage ladite proposition aux dites unités de traitement secondaire..

2. Procédé selon la revendication 1 **caractérisé en ce que** la sélection d'un ensemble de votants est réalisée selon des critères relatifs à la proximité, la nature de chaque votant et/ou le contenu de la requête.

3. Procédé selon l'une quelconque des revendications précédentes, **caractérisé en ce que** si un votant met en œuvre un algorithme convergent pour déterminer une réponse, à l'issue de la durée de traitement qui lui est impartie, il doit décider même si son algorithme n'a pas convergé.

4. Procédé selon l'une quelconque des revendications précédentes, **caractérisé en ce que** le réseau distribué est un réseau homogène ou hétérogène.

5. Procédé selon l'une quelconque des revendications précédentes, **caractérisé en ce que** toutes les unités de traitement du réseau distribué sont de niveaux hiérarchiques identiques ou différents.

6. Système comprenant une pluralité d'unités de traitement dotées d'une intelligence décisionnelle, ces unités de traitement étant connectées entre elles en réseau, chaque unité de traitement étant configurée en tant que décideur pour mettre en œuvre un procédé de prise de décision par propagation d'une proposition dans le réseau,
**caractérisé en ce que** le décideur est configuré pour :
a) déterminer une proposition sur réception d'une requête, la proposition étant un numéro PCI, Physical Cell Identity, que le décideur souhaite présenter en réponse à ladite requête, la décision à prendre étant la confirmation ou l'infirmation du numéro PCI à présenter en réponse à la requête reçue,
b) sélectionner un ensemble d'unités de traitement dites votants, pour analyser la proposition et présenter une réponse, cette réponse comprenant une confirmation de la proposition, une infirmation de la proposition ou une réponse « sans opinion »,
c) définir une pondération en pourcentage pour chaque votant ou groupe de votants ainsi sélectionnés,
d) définir un seuil de confirmation en pourcentage à partir duquel la proposition est considérée comme confirmée,
e) définir un seuil d'infirmation en pourcentage à partir duquel la proposition est considérée comme infirmée,
f) déclencher un temporisateur et définir au moins une durée de traitement,
g) transmettre ladite proposition avec la durée de traitement via le réseau distribué vers l'ensemble de votants,
h) pendant la durée de traitement, en fonction des réponses qu'il reçoit, le décideur détermine le pourcentage de réponse de confirmation et le pourcentage de réponse d'infirmation, puis confirme ou infirme la proposition en comparant les pourcentages ainsi déterminés aux seuils de confirmation et d'infirmation ; à l'issue de la durée de traitement, si aucune décision n'a été prise, le décideur récupère l'ensemble de réponses disponibles et détermine le pourcentage de réponse de confirmation et le pourcentage de réponse d'infirmation, puis confirme ou infirme la proposition en comparant les pourcentages ainsi déterminés aux seuils de confirmation et d'infirmation ;
le système étant **caractérisé en outre en ce qu'**au moins un votant est configuré pour appliquer les étapes a) à h) ci-dessus à d'autres unités de traitement dites secondaires en considérant la même proposition,
et **en ce que** le décideur est en outre configuré pour associer un niveau de priorité à la proposition, la durée de traitement étant spécifique à ce niveau de priorité, et pour affecter à la proposition soumise aux unités de traitement secondaires un niveau de priorité supérieur ou égal au niveau de priorité affecté à la proposition.

7. Equipement de télécommunication doté d'une intelligence décisionnelle et connecté dans un réseau de téléphonie mobile à une pluralité d'unités de traitement, cet équipement étant configuré en tant que décideur pour mettre en œuvre un procédé de prise de décision par propagation d'une proposition dans le réseau,
**caractérisé en ce que** le décideur est configuré pour :
a) déterminer une proposition sur réception d'une requête d'allouer un numéro PCI à un eNodeB du réseau de téléphonie mobile, la proposition étant un numéro PCI, Physical Cell Identity, que le décideur souhaite présenter en réponse à ladite requête, la décision à prendre étant la confirmation ou l'infirmation du numéro PCI à présenter en réponse à la requête reçue,
b) sélectionner un ensemble d'unités de traitement dites votants, pour analyser la proposition et de présenter une réponse, cette réponse comprenant une confirmation de la proposition, une infirmation de la proposition ou une réponse « sans opinion »,
c) définir une pondération en pourcentage pour chaque votant ou groupe de votants ainsi sélectionnés,
d) définir un seuil de confirmation en pourcentage à partir duquel la proposition est considérée comme confirmée,
e) définir un seuil d'infirmation en pourcentage à partir duquel la proposition est considérée comme infirmée,
f) déclencher un temporisateur et définir au moins une durée de traitement,
g) transmettre ladite proposition avec la durée de traitement via le réseau distribué vers l'ensemble de votants,
h) pendant la durée de traitement, en fonction des réponses qu'il reçoit, le décideur détermine le pourcentage de réponse de confirmation et le pourcentage de réponse d'infirmation, puis confirme ou infirme la proposition en comparant les pourcentages ainsi déterminés aux seuils de confirmation et d'infirmation ; à l'issue de la durée de traitement, si aucune décision n'a été prise, le décideur récupère l'ensemble de réponses disponibles et détermine le pourcentage de réponse de confirmation et le pourcentage de réponse d'infirmation, puis confirme ou infirme la proposition en comparant les pourcentages ainsi déterminés aux seuils de confirmation et d'infirmation ;
associer un niveau de priorité à la proposition, la durée de traitement étant spécifique à ce niveau de priorité,
affecter à la proposition soumise à des unités de traitement secondaires par au moins un autre votant un niveau de priorité supérieur ou égal au niveau de priorité affecté à la proposition,
propager ladite proposition aux dites unités de traitement secondaires.

8. Equipement selon la revendication 7, **caractérisé en ce que** cet équipement est un MME, un eNodeB ou un UE.

## Patentansprüche

1. Entscheidungsfindungsverfahren durch eine Verarbeitungseinheit, bezeichnet als Entscheider, per Verbreitung eines Vorschlags in einem Mobiltelefonnetz, umfassend Verarbeitungseinheiten, wobei jede Verarbeitungseinheit mit einer Entscheidungsintelligenz ausgerüstet ist, **dadurch gekennzeichnet, dass**:
a) der Entscheider einen Vorschlag beim Empfang einer Anfrage zur Zuteilung einer PCI-Nummer zu einem eNodeB des Mobiltelefonnetzes bestimmt, wobei der Vorschlag eine PCI-Nummer, Physical Cell Identity-Nummer, ist, die der Entscheider als Antwort auf die genannte Anfrage präsentieren möchte, wobei die zu treffende Entscheidung die Bestätigung oder die Ablehnung der PCI-Nummer ist, die als Antwort auf die empfangene Antwort zu präsentieren ist,
b) der Entscheider eine Gruppe von Verarbeitungseinheiten, bezeichnet als Abstimmende, zum Analysieren des Vorschlags und zum Präsentieren einer Antwort auswählt, wobei diese Antwort eine Bestätigung des Vorschlags, eine Ablehnung des Vorschlags oder eine Antwort "keine Meinung" umfasst,
c) der Entscheider eine prozentuale Gewichtung für jeden Abstimmenden oder jede Gruppe von Abstimmenden definiert, die auf diese Weise ausgewählt werden,
d) der Entscheider einen prozentualen Bestätigungs-Grenzwert definiert, ab dem der Vorschlag als bestätigt gilt,
e) der Entscheider einen prozentualen Ablehnungs-Grenzwert definiert, ab dem der Vorschlag als abgelehnt gilt,
f) der Entscheider einen Zeitgeber auslöst und wenigstens eine Verarbeitungsdauer definiert,
g) der Entscheider den genannten Vorschlag mit der Verarbeitungsdauer über das verteilte Netz zur Gruppe von Abstimmenden weiterleitet,
h) der Entscheider während der Verarbeitungsdauer in Abhängigkeit von den Antworten, die er empfängt, den Prozentsatz an Bestätigungsantworten und den Prozentsatz an Ablehnungsantworten bestimmt, dann den Vorschlag bestätigt oder ablehnt, indem er die auf diese Weise bestimmten Prozentsätze mit den Bestätigungs- und Ablehnungs-Grenzwerten vergleicht; wenn keine Entscheidung getroffen wurde, erhält der Entscheider nach Ablauf der Verarbeitungsdauer alle verfügbaren Antworten zurück und bestimmt den Prozentsatz an Bestätigungsantworten und den Prozentsatz an Ablehnungsantworten, dann bestätigt er den Vorschlag oder lehnt ihn ab, indem er die auf diese Weise bestimmten Prozentsätze mit den Bestätigungs- und Ablehnungs-Grenzwerten vergleicht;
wobei das Verfahren darüber hinaus **dadurch gekennzeichnet ist, dass** der Entscheider dem Vorschlag ein Prioritätsniveau zuordnet und dass die Verarbeitungsdauer für dieses Prioritätsniveau spezifisch ist und dass wenigstens ein Abstimmender konfiguriert ist, um die obigen Schritte a) bis h) auf andere, als sekundär bezeichnete Verarbeitungseinheiten unter Berücksichtigung desselben Vorschlags anzuwenden und dass der Entscheider dem Vorschlag, der den genannten sekundären Verarbeitungseinheiten unterworfen ist, ein Prioritätsniveau zuordnet, das höher oder gleich dem Prioritätsniveau ist, das dem Vorschlag zugeordnet ist und den genannten Vorschlag an die genannten sekundären Verarbeitungseinheiten verbreitet.

2. Verfahren gemäß Anspruch 1, **dadurch gekennzeichnet, dass** die Auswahl einer Gruppe von Abstimmenden gemäß Kriterien in Bezug auf die Nähe, die Art jedes Abstimmenden und/oder des Inhalts der Anfrage durchgeführt wird.

3. Verfahren gemäß irgendeinem der voranstehenden Ansprüche, **dadurch gekennzeichnet, dass**, wenn ein Abstimmender einen konvergierenden Algorithmus zum Bestimmen einer Antwort nach dem Ablauf der Verarbeitungsdauer umsetzt, die ihm auferlegt ist, muss er selbst dann eine Entscheidung treffen, wenn sein Algorithmus nicht konvergiert wurde.

4. Verfahren gemäß irgendeinem der voranstehenden Ansprüche, **dadurch gekennzeichnet, dass** das verteilte Netz ein homogenes oder heterogenes Netz ist.

5. Verfahren gemäß irgendeinem der voranstehenden Ansprüche, **dadurch gekennzeichnet, dass** alle Verarbeitungseinheiten des verteilten Netzes identische oder unterschiedliche hierarchische Niveaus sind.

6. System, umfassend eine Vielzahl von Verarbeitungseinheiten, die mit einer Entscheidungsintelligenz ausgerüstet sind, wobei diese Verarbeitungseinheiten miteinander vernetzt sind, wobei jede Verarbeitungseinheit als Entscheider konfiguriert ist, um ein Entscheidungsfindungsverfahren per Verbreitung eines Vorschlags im Netz umzusetzen,
**dadurch gekennzeichnet, dass** der Entscheider konfiguriert ist zum:
a) Bestimmen eines Vorschlags bei Eingang einer Anfrage, wobei der Vorschlag eine PCI-Nummer, Physical Cell Identity-Nummer, ist, die der Entscheider als Antwort auf die genannte Anfrage präsentieren möchte, wobei die zu treffende Entscheidung die Bestätigung oder die Ablehnung der PCI-Nummer ist, die als Antwort auf die empfangene Anfrage zu präsentieren ist,
b) Auswählen einer Gruppe von Verarbeitungseinheiten, bezeichnet als Abstimmende, zum Analysieren des Vorschlags und Präsentieren einer Antwort, wobei diese Antwort eine Bestätigung des Vorschlags, eine Ablehnung des Vorschlags oder eine Antwort "keine Meinung" umfasst,
c) Definieren einer prozentualen Gewichtung für jeden Abstimmenden oder jede Gruppe von Abstimmenden, die auf diese Weise ausgewählt sind,
d) Definieren eines prozentualen Bestätigungs-Grenzwertes, ab dem der Vorschlag als bestätigt gilt,
e) Definieren eines prozentualen Ablehnungs-Grenzwertes, ab dem der Vorschlag als abgelehnt gilt,
f) Auslösen eines Zeitgebers und Definieren wenigstens einer Verarbeitungsdauer,
g) Übertragen des genannten Vorschlags mit der Verarbeitungsdauer über das verteilte Netz auf die Gruppe von Abstimmenden,
h) der Entscheider während der Verarbeitungsdauer in Abhängigkeit von den Antworten, die er empfängt, den Prozentsatz an Bestätigungsantworten und den Prozentsatz an Ablehnungsantworten bestimmt, dann den Vorschlag bestätigt oder ablehnt, indem er die auf diese Weise bestimmten Prozentsätze mit den Bestätigungs- und Ablehnungs-Grenzwerten vergleicht; wenn keine Entscheidung getroffen wurde, erhält der Entscheider nach Ablauf der Verarbeitungsdauer alle verfügbaren Antworten zurück und bestimmt den Prozentsatz an Bestätigungsantworten und den Prozentsatz an Ablehnungsantworten, dann bestätigt er den Vorschlag oder lehnt ihn ab, indem er die auf diese Weise bestimmten Prozentsätze mit den Bestätigungs- und Ablehnungs-Grenzwerten vergleicht;
wobei das System weiterhin **dadurch gekennzeichnet ist, dass** wenigstens ein Abstimmender zum Anwenden der o. g. Schritte a) bis h) auf andere, als sekundär bezeichnete Verarbeitungseinheiten unter Berücksichtigung desselben Vorschlags konfiguriert ist,
und dass der Entscheider weiterhin zum Zuordnen eines Prioritätsniveaus zu dem Vorschlag konfiguriert ist, wobei die Verarbeitungsdauer für dieses Prioritätsniveau spezifisch ist, und zum Zuordnen eines Prioritätsniveaus, das höher oder gleich dem dem Vorschlag zugeordneten Prioritätsniveau ist, zu dem Vorschlag, der den sekundären Verarbeitungseinheiten unterworfen ist, konfiguriert ist.

7. Telekommunikationsausrüstung, die mit einer Entscheidungsintelligenz ausgerüstet und in einem Mobiltelefonnetz an eine Vielzahl von Verarbeitungseinheiten angeschlossen ist, wobei diese Ausrüstung als Entscheider konfiguriert ist, um ein Entscheidungsfindungsverfahren per Verbreitung eines Vorschlags im Netz umzusetzen,
**dadurch gekennzeichnet, dass** der Entscheider konfiguriert ist zum:
a) Bestimmen eines Vorschlags beim Empfang einer Anfrage zum Zuordnen einer PCI-Nummer zu einem eNodeB des Mobiltelefonnetzes, wobei der Vorschlag eine PCI-Nummer, Physical Cell Identity-Nummer, ist, die der Entscheider als Antwort auf die genannte Anfrage präsentieren möchte, wobei die zu treffende Entscheidung die Bestätigung oder die Ablehnung der PCI-Nummer ist, die als Antwort auf die empfangene Anfrage zu präsentieren ist,
b) Auswählen einer Gruppe von als Abstimmende bezeichneten Verarbeitungseinheiten zum Analysieren des Vorschlags und zum Präsentieren einer Antwort, wobei diese Antwort eine Bestätigung des Vorschlags, eine Ablehnung des Vorschlags oder eine Antwort "keine Meinung" umfasst,
c) Definieren einer prozentualen Gewichtung für jeden Abstimmenden oder jede Gruppe von Abstimmenden, die auf diese Weise ausgewählt sind,
d) Definieren eines prozentualen Bestimmungs-Grenzwertes, ab dem der Vorschlag als bestätigt gilt,
e) Definieren eines prozentualen Ablehnungs-Grenzwertes, ab dem der Vorschlag als abgelehnt gilt,
f) Auslösen eines Zeitgebers und Definieren wenigstens einer Verarbeitungsdauer,
g) Übertragen des genannten Vorschlags mit der Verarbeitungsdauer über das verteilte Netz auf alle Abstimmenden,
h) der Entscheider während der Verarbeitungsdauer in Abhängigkeit von den Antworten, die er empfängt, den Prozentsatz an Bestätigungsantworten und den Prozentsatz an Ablehnungsantworten bestimmt, dann den Vorschlag bestätigt oder ablehnt, indem er die auf diese Weise bestimmten Prozentsätze mit den Bestätigungs- und Ablehnungs-Grenzwerten vergleicht; wenn keine Entscheidung getroffen wurde, erhält der Entscheider nach Ablauf der Verarbeitungsdauer alle verfügbaren Antworten zurück und bestimmt den Prozentsatz an Bestätigungsantworten und den Prozentsatz an Ablehnungsantworten, dann bestätigt er den Vorschlag oder lehnt ihn ab, indem er die auf diese Weise bestimmten Prozentsätze mit den Bestätigungs- und Ablehnungs-Grenzwerten vergleicht;
Zuordnen eines Prioritätsniveaus zum Vorschlag, wobei die Verarbeitungsdauer für dieses Prioritätsniveau spezifisch ist,
Zuordnen eines Prioritätsniveaus, das höher als oder gleich dem dem Vorschlag zugeordneten Prioritätsniveau ist durch wenigstens einen anderen Abstimmenden zu dem Vorschlag, der sekundären Verarbeitungseinheiten unterworfen ist,
Verbreiten des genannten Vorschlags unter den genannten sekundären Verarbeitungseinheiten.

8. Ausrüstung gemäß Anspruch 7, **dadurch gekennzeichnet, dass** diese Ausrüstung ein MME, ein eNodeB oder ein UE ist.

## Claims

1. Process for making decisions by a so-called decider processing unit, by propagation of a proposition in a mobile telephone network comprising processing units, each processing unit being provided with decision intelligence, **characterised in that**:
a) the decider determines a proposition upon reception of a request to allocate a PCI number to an eNodeB of the mobile telephone network, the proposition being a PCI number, Physical Cell Identity, that the decider wants to present in response to said request, the decision to be made being the confirmation or the denial of the PCI number to be presented in response to the request received,
b) the decider selects a set of so-called voter processing units, to analyse the proposition and to present a response, this response comprising a confirmation of the proposition, a denial of the proposition or a "no opinion" response,
c) the decider defines a percentage weighting for each voter or group of voters thus selected,
d) the decider defines a confirmation threshold as a percentage from which the proposition is considered as confirmed,
e) the decider defines a denial threshold as a percentage from which the proposition is considered as denied,
f) the decider triggers a timer and defines at least one processing time,
g) the decider transmits said proposition with the processing time via the distributed network to all the voters,
h) during the processing time, according to the responses that it receives, the decider determines the confirmation response percentage and the denial response percentage, then confirms or denies the proposition by comparing the percentages thus determined with the confirmation and denial thresholds; following the processing time, if no decision has been made, the decider gathers all the responses available and determines the confirmation response percentage and the denial response percentage, then confirms or denies the proposition by comparing the percentages thus determined with the confirmation and denial thresholds;
the process being further **characterised in that** the decider associates a level of priority with the proposition, and **in that** the processing time is specific to this level of priority, **in that** at least one voter is configured to apply steps a) to h) hereinabove to other so-called secondary processing units by considering the same proposition, and **in that** the decider assigns a level of priority to the proposition subjected to said secondary processing units greater than or equal to the level of priority assigned to the proposition and propagates said proposition to said secondary processing units.

2. Process according to claim 1 **characterised in that** the selecting of a set of voters is carried out according to criteria relative to the proximity, the nature of each voter and/or the content of the request.

3. Process according to any preceding claim, **characterised in that** if a voter implements a converging algorithm to determine a response, following the processing time that it is allotted, it must decide even if its algorithm has not converged.

4. Process according to any preceding claim, **characterised in that** the distributed network is a homogeneous or heterogenous network.

5. Process according to any preceding claim, **characterised in that** all the processing units of the distributed network are identical or different hierarchical levels.

6. System comprising a plurality of processing units provided with decision intelligence, these processing units being connected together in a network, each processing unit being configured as a decider to implement a decision-making process by propagating a proposition in the network, **characterised in that** the decider is configured to:
a) determine a proposition upon reception of a request, the proposition being a PCI number, Physical Cell Identity, that the decider wants to present in response to said request, the decision to be made being the confirmation or the denial of the PCI number to be presented in response to the request received,
b) select a set of so-called voting processing units, to analyse the proposition and present a response, this response comprising a confirmation of the proposition, a denial of the proposition or a "no opinion" response,
c) define a percentage weighting for each voter or group of voters thus selected,
d) define a percentage confirmation threshold from which the proposition is considered as confirmed,
e) define a percentage denial threshold from which the proposition is considered as denied,
f) trigger a timer and define at least one processing time,
g) transmit said proposition with the processing time via the distributed network to all the voters,
h) during the processing time, according to the responses that it receives, the decider determines the confirmation response percentage and the denial response percentage, then confirms or denies the proposition by comparing the percentages thus determined with the confirmation and denial thresholds; following the processing time, if no decision has been made, the decider gathers all the responses available and determines the confirmation response percentage and the denial response percentage, then confirms or denies the proposition by comparing the percentages thus determined with the confirmation and denial thresholds;
the system being further **characterised in that** at least one voter is configured to apply steps a) to h) hereinabove to other so-called secondary processing units by considering the same proposition,
and **in that** the decider is furthermore configured to associate a level of priority with the proposition, the processing time being specific to this level of priority, and to assign to the proposition submitted to the secondary processing units a level of priority greater than or equal to the level of priority assigned to the proposition.

7. Telecommunication equipment provided with decision intelligence and connected in a mobile telephone network with a plurality of processing units, with this equipment being configured as a decider to implement a decision-making process by propagating a proposition in the network, **characterised in that** the decider is configured to:
a) determine a proposition upon reception of a request to allocate a PCI number to an eNodeB of the mobile telephone network, the proposition being a PCI number, Physical Cell Identity, that the decider wants to present in response to said request, the decision to be made being the confirmation or the denial of the PCI number to be presented in response to the request received,
b) select a set of so-called voting processing units, to analyse the proposition and to present a response, this response comprising a confirmation of the proposition, a denial of the proposition or a "no opinion" response,
c) define a percentage weighting for each voter or group of voters thus selected,
d) define a percentage confirmation threshold from which the proposition is considered as confirmed,
e) define a percentage denial threshold from which the proposition is considered as denied,
f) trigger a timer and define at least one processing time,
g) transmit said proposition with the processing time via the distributed network to all the voters,
h) during the processing time, according to the responses that it receives, the decider determines the confirmation response percentage and the denial response percentage, then confirms or denies the proposition by comparing the percentages thus determined with the confirmation and denial thresholds; following the processing time, if no decision has been made, the decider gathers all the responses available and determines the confirmation response percentage and the denial response percentage, then confirms or denies the proposition by comparing the percentages thus determined with the confirmation and denial thresholds;
associate a level of priority with the proposition, the processing time being specific to this level of priority,
assign to the proposition submitted to secondary processing units by at least one other voter a level of priority greater than or equal to the level of priority assigned to the proposition,
propagate said proposition to said secondary processing units.

8. Equipment according to claim 7, **characterised in that** this equipment is a MME, an eNodeB or an UE.
